# EUROPEAN PATENT APPLICATION

(11) **EP 1 428 721 A2**
(43) Date of publication of application: **16.06.2004**
(21) Application number: 03104221.1
(22) Date of filing: 17.11.2003
(51) Int. Cl.: B60Q 1/14

(54) **Combination switch apparatus**

(30) Priority: 15.11.2002 JP 2002332677
(71) Applicant: YAZAKI CORPORATION, Minato-ku Tokyo 108 (JP)
(72) Inventor: Akahori, Hidehiro, Haibara-gun (JP)
(74) Representative: Brunner, Michael John

(57) **Abstract**

A combination switch apparatus of this invention includes switches 17 and 18 which can be switched by tilting the combination switch apparatus from a neutral position in a first direction or a second direction. The first switch 17 includes a first fixed contact 35 which is closed upon tilting of the combination switch apparatus in the first direction, and a second fixed contact which is closed upon tilting of the combination switch apparatus in the second direction. The second switch 18 includes a third fixed contact 40 which is closed upon tilting of the combination switch apparatus in the first direction, and a fourth fixed contact which is closed upon tilting of the combination switch apparatus in the second direction. At least a delay time is set between the closing of the fixed contact of the first switch 17 and the closing of the fixed contact of the second switch 18 upon tilting of the combination switch apparatus in the first direction or the second direction.

## Description

### BACKGROUND OF THE INVENTION

This invention relates to a combination switch apparatus which is mounted on a steering column of a vehicle, and can be inverted relative to a neutral position so as to effect a switching operation.

There is known a related combination switch apparatus which projects right or left from a steering column to assume a stick-like configuration (See JP-A-10-315918).

Such a combination switch apparatus includes a first moving knob switch which can be angularlymoved in a roller-like manner to switch the operation of a front wiper between a stop position (OFF), an intermittent position (INT), a low speed position (LO) and a high speed position (HI).
Also, this combination switch apparatus includes a second moving knob switch which can be angularlymoved in a roller-like manner to switch the operation of a rear wiper between a stop position (OFF) and an operative position (ON).
This combination switch apparatus further includes a third moving knob switch which can be angularly moved in a roller-like manner to set a desired intermittent stop time of the front wiper between the shortest time and the longest time when the first moving knob switch is held in the intermittent position (INT).
The combination switch apparatus further includes a washer switch, and the whole of the combination switch apparatus can be tilted relative to the steering column from a neutral position to a forward side (toward the driver) or a rearward side (toward the front side of the vehicle). When the washer switch is tilted to the forward side, the washer switch activates a front washer, and when the washer switch is tilted to the rearward side, the washer switch activates a rear washer. The washer switch is of the self-returning type which returns to its neutral position when an operating force ceases to be applied thereto.

When the washer switch is tilted to the forward side to activate the front washer, a front wiper control circuit, connected in parallel with a front washer control circuit, is activated, so that a jet of washing liquid is applied to a front windshield glass, and then the front wiper effects a first wiping operation.
Then, when the washer switch ceases to be tilted to the forward side, the operation of the front washer is stopped, and the front wiper effects a last wiping operation, and then a front wiper blade returns to a predetermined stop position.

When the washer switch is tilted to the rearward side to activate the rear washer, a rear wiper control circuit, connected in parallel with a rear washer control circuit, is activated, so that a jet of washing liquid is applied to a rear windshield glass, and then the rear wiper effects a first wiping operation.
Then, when the washer switch ceases to be tilted to the rearward side, the operation of the rear washer is stopped, and the rear wiper effects a last wiping operation, and then a rear wiper blade returns to a predetermined stop position.

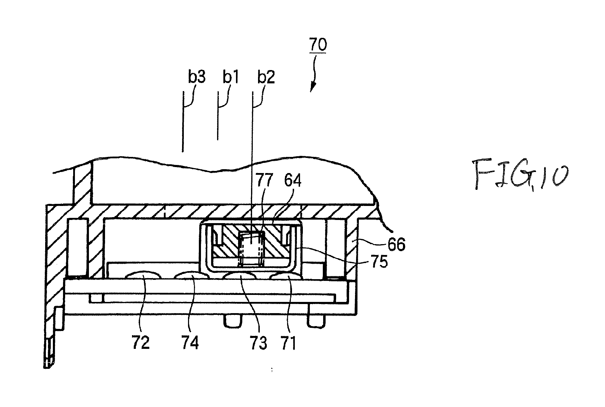

Such a washer switch has the specific structure shown in Figs. 9 and 10. Fig. 9 shows a first switch 60 for the washers, and Fig. 10 shows a second switch 80 for the wipers.

As shown in Fig. 9, the first switch 60 comprises first and second fixed contacts 61 and 62, a common contact 63 provided between the first and second fixed contacts 61 and 62, a contact holder 64 which is common to this first switch and the second switch 70, a moving contact 65, and a casing 66 which is common to this first switch and the second switch 70.

The first fixed contact 61 is connected to the front washer control circuit, and when the first fixed contact 61 is connected to the common contact 63 via the moving contact 65, the front washer control circuit is activated.
The second fixed contact 62 is connected to the rear washer control circuit, and when the second fixed contact 62 is connected to the common contact 63 via the moving contact 65, the rear washer control circuit is activated.
The common contact 63 is connected to a common power source or the common ground.
The contact holder 64 holds the moving contact 65 through a spring 67, and when a knob 68, projecting from the casing 66, is pressed upon tilting of the combination switch apparatus apparatus, the contact holder 64 is slid in a left-right direction (in the drawings) within the casing 66.

In the first switch 60, when the combination switch apparatus is located in the neutral position, the center of the contact holder 64 is disposed at a position a1 (in the drawings), and the moving contact 65 is connected only to the common contact 63.

When the contact holder 64 is slid from the neutral position a1 to a position a2 (as shown in Fig. 9) by tilting the combination switch apparatus toward the forward side, the moving contact 65 is connected to the first fixed contact 61 and the common contact 63, so that the front washer control circuit is activated.

When the contact holder 64 is slid from the neutral position a1 to a position a3 (in the drawings) by tilting the combination switch apparatus toward the rearward side, the moving contact 65 is connected to the second fixed contact 62 and the common contact 63, so that the rear washer control circuit is activated.

As shown in Fig. 10, the second switch 70 comprises third and fourth fixed contacts 71 and 72, common contacts 73 and 74, the contact holder 64, a moving contact 75, and the casing 66.

The third fixed contact 71 is connected to the front wiper control circuit, andwhen the third fixed contact 71 is connected to the common contact 73 via the moving contact 75, the front wiper control circuit is activated.
The fourth fixed contact 72 is connected to the rear wiper control circuit, and when the fourth fixed contact 72 is connected to the common contact 74 via the moving contact 75, the rear wiper control circuit is activated.
The common contacts 73 and 74 are connected to the common power source or the common ground.
The contact holder 64 holds the moving contact 75 through a spring 77, and when the knob 68, shown in Fig. 9, is pressed upon tilting of the combination switch apparatus apparatus, the contact holder 64 is slid in the left-right direction (in the drawings) within the casing 66.

In the second switch 70, when the combination switch apparatus is located in the neutral position, the center of the contact holder 64 is disposed at a position b1 (identical to the position a1 in the drawings), and the moving contact 75 is connected only to the common contacts 73 and 74.

When the contact holder 64 is slid from the neutral position b1 to a position b2 (identical to the position a2 in the drawings) by tilting the combination switch apparatus toward the forward side, the moving contact 75 is connected to the third fixed contact 71 and the common contact 73, so that the front wiper control circuit is activated.

When the contact holder 64 is slid fromtheneutralposition b1 to a position b3 (identical to the position a3 in the drawings) by tilting the combination switch apparatus toward the rearward side, the moving contact 75 is connected to the fourth fixed contact 72 and the common contact 74, so that the rear wiper control circuit is activated.

Thus, in accordance with the tiling of the combination switch apparatus apparatus, the first and second switches 60 and 70 effect their respective switching operations at the same time, and activate the front washer and the front wiper or the rear washer or the rear wiper at the same time, respectively.

In the above related combination switch apparatus apparatus, however, the order of switching of the first switch 60 and the second switch 70 is not stable, and an arc discharge is liable to be produced between the contacts of that switch which is connected at a slightly-delayed time. Therefore, sliding-purpose grease to be coated onto the contacts need to be of the costly type capable of withstanding high-temperature heat and wear of the contacts due to an arch discharge, which has invited a problem that this construction is disadvantage from the viewpoint of the cost.

### SUMMARY OF THE INVENTION

This invention has been made in order to solve the above problem, and an object of the invention is to provide a combination switch apparatus in which a special design is incorporated in the structure of the switch operable by manipulation, so that the combination switch apparatus is excellent from the viewpoint of the cost.

In order to solve the aforesaid object, the invention is characterized by having the following arrangement.
(1) A combination switch apparatus adapted to be switched by tilting the combination switch apparatus in a first direction and a second direction with respect to a steering column, the combination switch apparatus comprising:
   a first switch including a first fixed contact which is closed upon tilting of the combination switch apparatus in the first direction and a second fixed contact which is closed upon tilting of the combination switch apparatus in the second direction; and
   a second switch including a third fixed contact which is closed upon tilting of the combination switch apparatus in the first direction and a second fixed contact which is closed upon tilting of the combination switch apparatus in the second direction,
   wherein a delay time is set between the closing of the fixed contact of the first switch and the closing of the fixed contact of the second switch upon tilting of the combination switch in one of the first and second direction.
(2) The combination switch according to (1), wherein
   the closing of the first fixed contact is established by an electrical connection between the first fixed contact and a first common contact,
   the closing of the second fixed contact is established by an electrical connection between the first fixed contact and the first common contact,
   the closing of the third fixed contact is established by an electrical connection between the third fixed contact and a second common contact, and
   the closing of the fourth fixed contact is established by an electrical contact between the fourth fixed contact and the second common contact.
(3) The combination switch apparatus according to (2), wherein
   a contact pitch between the first fixed contact and the first common contact is different from a contact pitch between the third fixed contact and the second common contact, and
   a contact pitch between the second fixed contact and the first common contact is different from a contact pitch between the fourth fixed contact and the second common contact.
(4) The combination switch apparatus according to any one of (1) through (3), wherein the first and second switches include a common contact holder which can be slid upon tilting of the combination switch apparatus, and a moving contact for the first switch and a moving contact for the second switch are held by the contact holder.

### BRIEF DESCRIPTION OF THE DRAWINGS

Fig. 1 is a plan view of one preferred embodiment of a combination switch apparatus of the invention.
Fig. 2 is a partly-broken, bottom view of the combination switch apparatus of Fig. 1.
Fig. 3 is a partly-broken, longitudinal cross-sectional view of the combination switch apparatus of Fig. 1.
Fig. 4 is a cross-sectional view showing an operative condition of a first switch when tilting the combination switch apparatus of Fig. 1 in a first direction.
Fig. 5 is a cross-sectional view showing an operative condition of the first switch when tilting the combination switch apparatus of Fig. 1 in a second direction.
Fig. 6 is a cross-sectional view showing an operative condition of a second switch when tilting the combination switch apparatus of Fig. 1 in the first direction.
Fig. 7 is a cross-sectional view showing an operative condition of the second switch when tilting the combination switch apparatus of Fig. 1 in the second direction.
Fig. 8 is a plan view of a fixed contact plate used in the combination switch apparatus of Fig. 1.
Fig. 9 is a cross-sectional view showing an operative condition of a related combination switch apparatus.
Fig. 10 is a cross-sectional view showing an operative condition of the related combination switch apparatus.

### DETAILED DESCRIPTION OF PREFERRED EMBODIMENTS

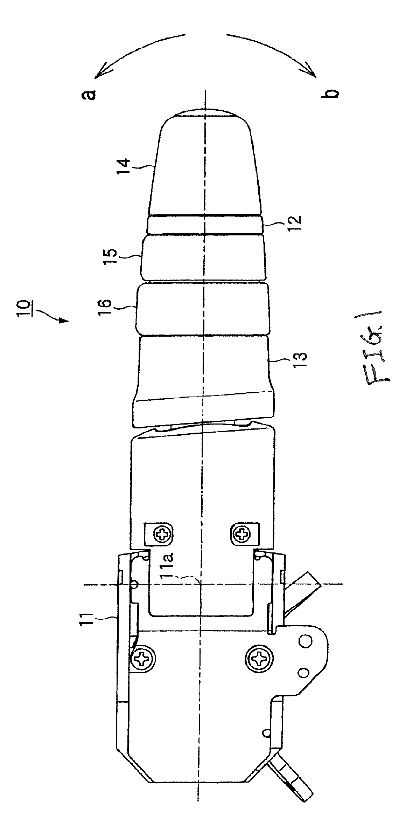

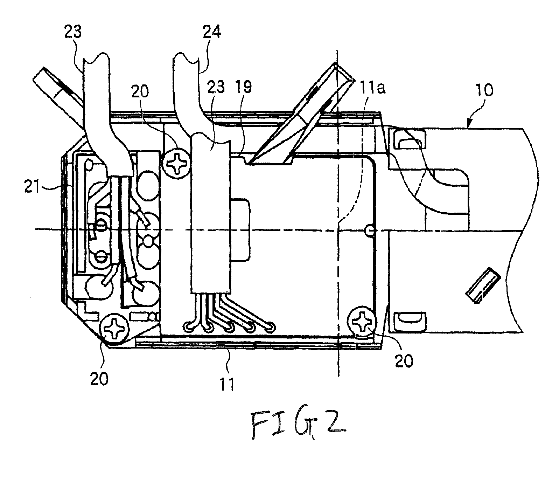

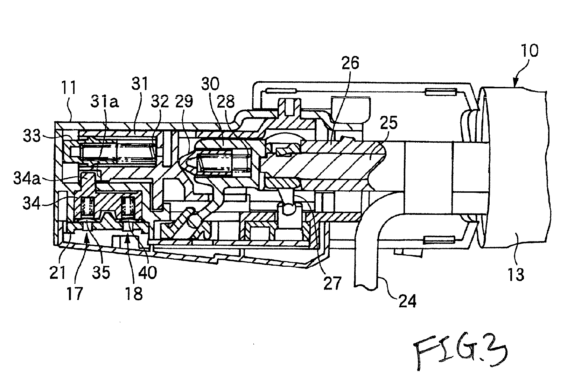

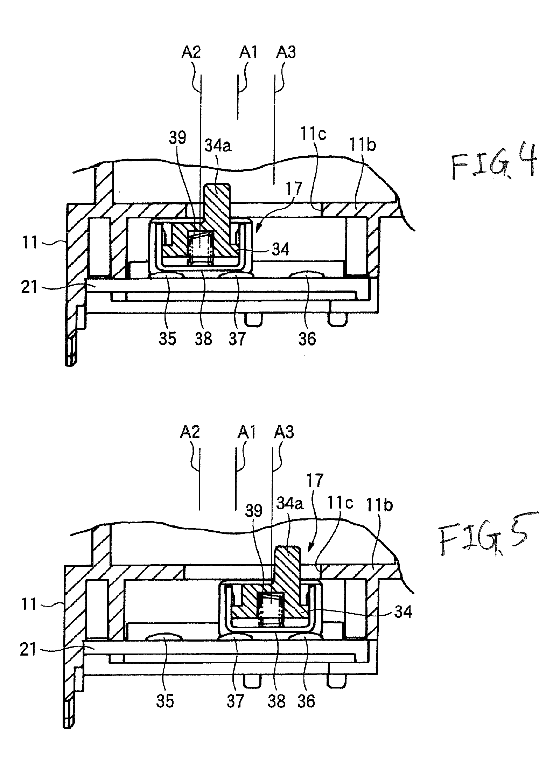

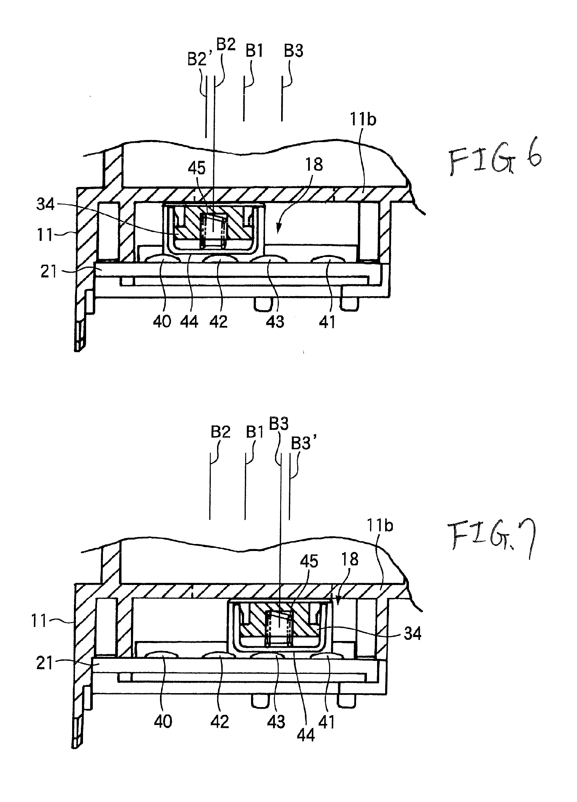

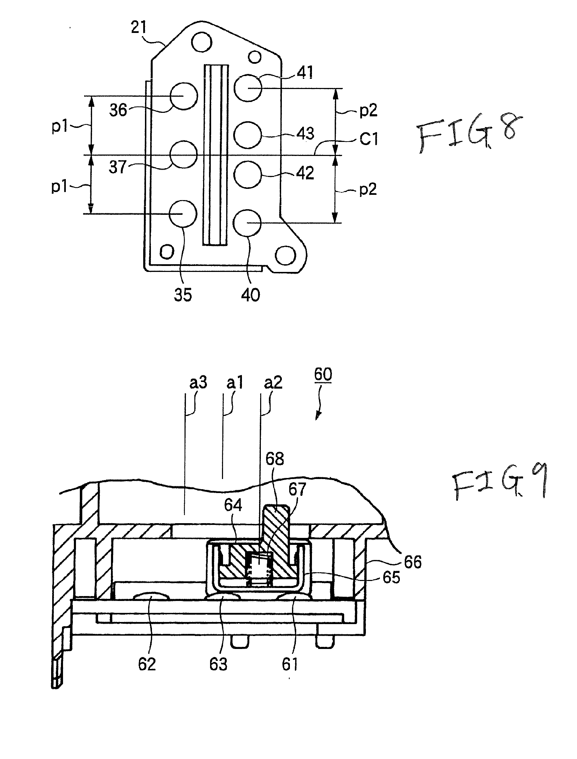

One preferred embodiment of a combination switch apparatus of the present invention will now be described in detail with reference to Figs. 1 to 8. Fig. 1 is a plan view of one preferred embodiment of the combination switch apparatus of the invention, Fig. 2 is a partly-broken, bottom view of the combination switch apparatus of Fig. 1, Fig. 3 is a partly-broken, longitudinal cross-sectional view of the combination switch apparatus of Fig. 1, Fig. 4 is a cross-sectional view showing an operative condition of a first switch when tilting the combination switch apparatus of Fig. 1 in a first direction, and Fig. 5 is a cross-sectional view showing an operative condition of the first switch when tilting the combination switch apparatus of Fig. 1 in a second direction.
Fig. 6 is a cross-sectional view showing an operative condition of a second switch when tilting the combination switch apparatus of Fig. 1 in the first direction, Fig. 7 is a cross-sectional view showing an operative condition of the second switch when tilting the combination switch apparatus of Fig. 1 in the second direction, and Fig. 8 is a plan view of a fixed contact plate used in the combination switch apparatus of Fig. 1.

As shown in Fig. 1, the combination switch apparatus 10 of this embodiment comprises a body portion 1, first and second fixed knobs 12 and 13, first, second and third moving knobs 14, 15 and 16, and first and second switches 17 and 18 (shown in Fig. 3) each of which is switched by tilting it in a direction a or a direction b (in the drawings) about a tilting center position 11a of the body portion 11.
The body portion 11 is fixed to a side portion of a steering column (not shown), and therefore the combination switch apparatus 10 is provided to project laterally from the steering column. The first and second fixed knobs 12 and 13 are fixedly mounted on the body portion 11 against rotation.

The first moving knob 14 can be angularly moved relative to the first fixed knob 12 to be switched between a stop position (OFF), an intermittent position (INT), a low speed position (LO) and a high speed position (HI), thereby controlling the operation of a front wiper.
The second moving knob 15 can be angularly moved relative to the first fixed knob 12 to be switched between a stop position (OFF) and an operative position (ON), thereby controlling the operation of a rear wiper.
The third moving knob 16 can be angularly moved relative to the second fixed knob 12 to set a desired intermittent stop time of the front wiper between the predetermined shortest time and the predetermined longest time.

As shown in Fig. 2, a circuit board 19 is fixed to a bottom surface of the body portion 11 by screws 20, and a fixed contact plate 21 is fixed to the bottom surface by screws 20. A wire harness 22 is electrically connected to the circuit board 19, and a wire harness 23 is electrically connected to the fixed contact board 21.
A wire harness 24 is extended to each of the moving knobs 14, 15 and 16. The fixed contact plate 21 is used for the first and second switches 17 and 18.

As shown in Fig. 3, a shaft 25 and a knob support member 26 which support the knobs 12, 13, 14, 15 and 16 are provided within the body portion 11 along an axis thereof. A pivot member 27, provided at a proximal end portion of the shaft 25, defines the tilting center position 11a.

A slider pressing member 30 is provided at the proximal ends of the shaft 25 and knob support member 26, and this slider pressing member 30 is urged toward the shaft 25 via a spring 28 and a plunger 29, and therefore is engaged with the shaft 25. When the proximal end portion of the shaft 25 is pivotally moved about the tilting center position 11a through the pivot member 27, the sliderpressingmember 30, whilepivotallymoved, is slightly displaced in a forward-rearward direction of the body portion 11 to press a slider 31.

The slider 31 is urged toward the slider pressing member 30 by a spring 32 and a plunger 33, and therefore is engaged with the slider pressing member 30. An engagement recess 31a is formed in a proximal end portion of the slider 31, and a projection 34a, formed on a contact holder 34 forming part of the first and second switches 17 and 18, is engaged in the engagement recess 31a. When the slider pressing member 30 is displaced, the slider 31 causes the contact holder 34 to slide in the forward-rearward direction (in Fig. 3).

The first and second switches 17 and 18 are arranged in two rows, and are juxtaposed in the direction of the length of the body portion 11. The fixed contact plate 21 and the contact holder 34 are common to the switches 17 and 18.

As shown in Fig. 4, the first switch 17 comprises first and second fixed contacts 35 and 36, a common contact 37 provided between the first and second fixed contacts 35 and 36, and a moving contact 38.
The first fixed contact 35 is connected to a front washer control circuit, and when the first fixed contact 35 is connected to the common contact 37 via the moving contact 38, the front washer control circuit is activated.

The second fixed contact 36 is connected to a rear washer control circuit, and when the second fixed contact 36 is connected to the common contact 37 via the moving contact 38, the rear washer control circuit is activated. The common contact 37 is connected to a common power source or the common ground.
The contact holder 34 holds the moving contact 38 through a spring 39, and when the projection 34a, projecting through a notch 11c formed through a partition wall 11b of the body portion 11, is pressed by the slider 31, the contact holder 34 is slid in a left-right direction in Fig. 4.

In the first switch 17, when the combination switch apparatus 10 is located in a neutral position (as shown in Fig. 1), the center of the contact holder 34 is disposed at a position A1 (in Fig. 4), and the moving contact 38 is connected only to the common contact 37.
In the first switch 17, when the contact holder 34 is slid from the neutral position A1 to a position A2 by tilting the combination switch apparatus 10 toward the forward side (that is, in the direction b in Fig. 1), the moving contact 38 is connected to the first fixed contact 35 and the common contact 37, so that the front washer control circuit is activated.

In the first switch 17, when the contact holder 34 is slid from the neutral position A1 to a position A3 (as shown in Fig. 5) by tilting the combination switch apparatus 10 toward the rearward side (that is, in the direction a in Fig. 1), the moving contact 38 is connected to the second fixed contact 36 and the common contact 37, so that the rear washer control circuit is activated.

As shown in Fig. 6, the second switch 18 comprises third and fourth fixed contacts 40 and 41, common contacts 42 and 43 provided between the third and fourth fixed contacts 40 and 41, and a moving contact 44.
The third fixed contact 40 is connected to a front wiper control circuit, and when the third fixed contact 40 is connected to the common contact 42 via the moving contact 44, the front wiper control circuit is activated.
The fourth fixed contact 41 is connected to a rear wiper control circuit, and when the fourth fixed contact 41 is connected to the common contact 43 via the moving contact 44, the rear wiper control circuit is activated. The common contacts 42 and 43 are connected to the common power source or the common ground.

The moving contact 44 is held by the contact holder 34 through a spring 45, and when the projection 34a of the contact holder 34 is pressed by the slider 31, the contact holder 64 is slid in the left-right direction (in the drawings).
In the second switch 18, when the combination switch apparatus 10 is located in the neutral position (as shown in Fig. 1), the center of the contact holder 34 is disposed at a position B1 (in Fig. 6) , and the moving contact 44 is connected only to the common contacts 42 and 43.

In the second switch 18, even when the contact holder 34 is slid from the neutral position B1 to a position B2 (in Fig. 6) by tilting the combination switch apparatus 10 toward the forward side (that is, in the direction b in Fig. 1) , the moving contact 44 is not connected to the third fixed contact 40.
Then, when the contact holder 34 is slidingly moved slightly past the position B2 to reach a position B2', the moving contact 44 is connected to the third fixed contact 40 and the common contact 42, so that the front wiper control circuit is activated. Namely, the activation of the front wiper control circuit by the second switch 18 is effected in delayed relation to the activation of the front washer control circuit by the first switch 17.

In the second switch 18, even when the contact holder 34 is slid from the neutral position B1 to a position B3 (as shown in Fig. 7) by tilting the combination switch apparatus 10 toward the rearward side (that is, in the direction a in Fig. 1) , the moving contact 44 is not connected to the fourth fixed contact 41.
Then, when the contact holder 34 is slidingly moved slightly past the position B3 to reach a position B3', the moving contact 44 is connected to the fourth fixed contact 41 and the common contact 43, so that the rear wiper control circuit is activated. Namely, the activation of the rear wiper control circuit by the second switch 18 is effected in delayed relation to the activation of the rear washer control circuit by the first switch 17.

In the fixed contact plate 21, a contact pitch (distance) p2 between a center position C1 (corresponding to the neutral position A1, B1 of the contact holder 34) and the center of the third fixed contact 40 is larger than a contact pitch (distance) p1 between the center position C1 and the center of the first fixed contact 35 as shown in Fig. 8.
Also, a contact pitch p2 between the center position C1 and the center of the fourth fixed contact 41 is larger than a contact pitch p1 between the center position C1 and the center of the second fixed contact 36. Thus, the contact pitch of the second switch 18 is larger than the contact pitch of the first switch 17.

When the combination switch apparatus 10 is tilted toward the forward side (that is, in the direction b in Fig. 1) after electric power is supplied, the moving contact 38 of the first switch 17 is connected to the first fixed contact 35 and the common contact 37, thereby activating the front washer control circuit.
Then, in the second switch 1.8, the moving contact 44 is connected to the third fixed contact 40 and the common contact 42 in slightly-delayed relation to the first switch 17, so that the front wiper control circuit is activated. Namely, the activation of the front wiper control circuit by the second switch 18 is effected in delayed relation to the activation of the front washer control circuit by the first switch 17.

When the combination switch apparatus 10 is tilted toward the rearward side (that is, in the direction a in Fig. 1) , the moving contact 38 of the first switch 17 is connected to the second fixed contact 36 and the common contact 37, thereby activating the rear washer control circuit.
Then, in the second switch 18, the moving contact 44 is connected to the fourth fixed contact 41 and the common contact 43 in slightly-delayed relation to the first switch 17, so that the rear wiper control circuit is activated. Namely, the activation of the rear wiper control circuit by the second switch 18 is effected in delayed relation to the activation of the rear washer control circuit by the first switch 17.

In the combination switch apparatus 10 of the invention, at least a delay time is set between the closing of the first fixed contact 35 and the closing of the third fixed contact 40 upon tilting of the combination switch apparatus toward the forward side, or a delay time is set between the closing of the second fixed contact 36 and the closing of the fourth fixed contact 41 upon tilting of the combination switch apparatus toward the rearward side.
Therefore, the first and third fixed contacts 35 and 40 or the second and fourth fixed contacts 36 and 41 will not be closed at the same time, but will be closed with a time delay inserted therebetween. Therefore, the order of switching of the two switches is made stable by this time difference, and therefore there is eliminated an arc discharge as produced when the two contacts are closed at the same time, and expensive sliding-purpose grease for dealing with the generation of an arc discharge does not need to be coated onto the contacts, and this is advantageous from the viewpoint of the cost.

And besides, at least the contact pitch of connection between the first fixed contact 35 and the common contact 37 is different from the contact pitch of connection between the third fixed contact 40 and the common contact 42. Also, the contact pitch of connection between the second fixed contact 36 and the common contact 37 is different from the contact pitch of connection between the fourth fixed contact 41 and the common contact 43.
Therefore, because of these different contact pitches, the first and third fixed contacts 35 and 40 or the second and fourth fixed contacts 36 and 41 will not be connected at the same time. Therefore, the order of switchingof the two switches is made stable by the connections having the time difference, and therefore there is eliminated an arc discharge as produced when the two contacts are connected at the same time, and expensive sliding-purpose grease for dealing with the generation of an arc discharge does not need to be coated onto the contacts, and this is advantageous from the viewpoint of the cost.

When the common contact holder 34 is slid, the delay time is provided between the closing of the first fixed contact 35 via the moving contact 38 and the closing of the third fixed contact 40 via the moving contact 44, or the delay time is provided between the closing of the second fixed contact 36 via the moving contact 38 and the closing of the fourth fixed contact 41 via the moving contact 44.

Therefore, the first and third fixed contacts 35 and 40 or the second and fourth fixed contacts 36 and 41 will not be closed at the same time via the moving contacts 38 and 44, but will be closed with the time delay inserted therebetween. Therefore, the order of switching of the two switches is made stable by this time difference, and therefore there is eliminated an arc discharge as produced when the two contacts are closed at the same time, and expensive sliding-purpose grease for dealing with the generation of an arc discharge does not need to be coated onto the contacts, and this is advantageous from the viewpoint of the cost.

The combination switch apparatus of the invention is not limited to the above embodiment, and suitable changes and modifications can be made. For example, the two common contacts, used in the second switch, may be formed into an integral single contact.
The moving contacts are not limited to the illustrated contacts, and a bar-like contact can be used as the moving contact, and a plate-like contact plate may be used as the fixed contact.

As described above, in the malfunction prevention structure of the combination switch apparatus, at least the delay time is set between the closing of the first fixed contact and the closing of the third fixed contact upon tilting of the combination switch apparatus in the first direction, or the delay time is set between the closing of the second fixed contact and the closing of the fourth fixed contact upon tilting of the combination switch apparatus in the second direction.
Therefore, the first and third fixed contacts or the second and fourth fixed contacts will not be closed at the same time, but will be closed with a time delay inserted therebetween. Therefore, the order of switching of the two switches is made stable bythi s time di fference, andtherefore there is eliminated an arc discharge as produced when the two contacts are closed at the same time, and expensive sliding-purpose grease for dealing with the generation of an arc discharge does not need to be coated onto the contacts, and this is advantageous from the viewpoint of the cost.

In the combination switch apparatus of the invention, at least the contact pitch of connection between the first fixed contact and the common contact is different from the contact pitch of connection between the third fixed contact and the second common contact, or the contactpitch of connectionbetween the second fixed contact and the first common contact is different from the contact pitch of connection between the fourth fixed contact and the second common contact.
Therefore, because of these different contact pitches, the first and third fixed contacts or the second and fourth fixed contacts will not be connected at the same time. Therefore, the order of switching of the two switches is made stable by the connections having the time difference, and therefore there is eliminated an arc discharge as produced when the two contacts are connected at the same time, and expensive sliding-purpose grease for dealing with the generation of an arc discharge does not need to be coated onto the contacts, and this is advantageous from the viewpoint of the cost.

In the combination switch apparatus of the invention, when the common contact holder is slid, the delay time is provided between the closing of the first fixed contact via the moving contact and the closing of the third fixed contact via the moving contact, or the delay time is provided between the closing of the second fixed contact via the moving contact and the closing of the fourth fixed contact via the moving contact.
Therefore, the first and third fixed contacts or the second and fourth fixed contacts will not be closed at the same time via the moving contacts, but will be closed with the time delay inserted therebetween. Therefore, the order of switching of the two switches is made stable by this time difference, and therefore there is eliminated an arc discharge as produced when the two contacts are closed at the same time, and expensive sliding-purpose grease for dealing with the generation of an arc discharge does not need to be coated onto the contacts, and this is advantageous from the viewpoint of the cost.

## Claims

1. A combination switch apparatus adapted to be switched by tilting the combination switch apparatus in a first direction and a second direction with respect to a steering column, the combination switch apparatus comprising:
a first switch including a first fixed contact which is closed upon tilting of the combination switch apparatus in the first direction and a second fixed contact which is closed upon tilting of the combination switch apparatus in the second direction; and
a second switch including a third fixed contact which is closed upon tilting of the combination switch apparatus in the first direction and a second fixed contact which is closed upon tilting of the combination switch apparatus in the second direction,
wherein a delay time is set between the closing of the fixed contact of the first switch and the closing of the fixed contact of the second switch upon tilting of the combination switch in one of the first and second direction.

2. The combination switch according to claim 1, wherein
the closing of the first fixed contact is established by an electrical connection between the first fixed contact and a first common contact,
the closing of the second fixed contact is established by an electrical connection between the first fixed contact and the first common contact,
the closing of the third fixed contact is established by an electrical connection between the third fixed contact and a second common contact, and
the closing of the fourth fixed contact is established by an electrical contact between the fourth fixed contact and the second common contact.

3. The combination switch apparatus according to claim 2, wherein
a contact pitch between the first fixed contact and the first common contact is different from a contact pitch between the third fixed contact and the second common contact, and
a contact pitch between the second fixed contact and the first common contact is different from a contact pitch between the fourth fixed contact and the second common contact.

4. The combination switch apparatus according to any one of claims 1 through 3, wherein the first and second switches include a common contact holder which can be slid upon tilting of the combination switch apparatus, and a moving contact for the first switch and a moving contact for the second switch are held by the contact holder.
